# EUROPEAN PATENT APPLICATION

(11) **EP 3 220 336 A1**
(43) Date of publication of application: **20.09.2017**
(21) Application number: 17161039.7
(22) Date of filing: 15.03.2017
(51) Int. Cl.: G06Q 30/02, G06Q 30/06

(54) **METHOD AND SYSTEM FOR NORMALIZING UNIT OF MEASURES OF A PRODUCT**

(30) Priority: 15.03.2016 IN 201621009059
(71) Applicant: Tata Consultancy Services Limited, Maharashtra (IN)
(72) Inventor: JAYAVEER, Deepa Devi, 600 096 Chennai, Tamilnadu (IN); THOPPASAMY, Kalaiyarasi, 600 096 Chennai, Tamilnadu (IN); RAJAGOPAL, Rekha, 600 096 Chennai, Tamilnadu (IN); VELLAIYATHA, Sirajudeen, 600 096 Chennai, Tamilnadu (IN)
(74) Representative: Goddar, Heinz J.

(57) **Abstract**

A method and system is provided for normalizing a unit of measure (UOM) of a product. Generally different retailers use different product and format for providing their product description. According to the present invention, the UOM string is extracted from the product information, which is retrieved by the web scraper. The UOM string is then converted into a standard UOM based on the review by the UOM data dictionary. And finally the converted standard UOM is normalized using a normalization module. The normalized UOM can be used for further applications.

## Description

### CROSS-REFERENCE TO RELATED APPLICATIONS AND PRIORITY

The present application claims priority from Indian non-provisional specification no. 201621009059 filed on 15th March, 2016, the complete disclosure of which, in its entirety is herein incorporated by references.

### TECHNICAL FIELD

The present application generally relates to the field of product analysis in the retail industry. More particularly, the application provides a method and system for normalizing a unit of measures of a product provided by multiple retailers.

### BACKGROUND

In the field of retail industry, there is a huge challenge for the retailers to keep themselves up to the mark in the competition. It is necessary for the retailer to keep a vigilant on the competitor's products. To accomplish that, the retailers has to understand the market and get the constant check on competitor's price for the key items which they carry in the stores or online. Generally, a particular product is manufactured by multiple retailers. The information about the product is normally present on their websites.

The huge challenge is to match the competitor's product description with their retailer's product description. For example, some retailer maintain fl oz for shampoo category and other retailer store the same shampoo product with oz units. Comparing those entities would lead to different results. Generally a product description includes name of the product, and quantity of the product, product description and unit of measures (UOM) of the product. The product attributes need to be matched to meet the accuracy. The product attributes measurement for the same product would be different for different retailers. To compare the product information, various retailers are using manual methods to look at the products price on the website. But those are time taking and cumbersome methods. In addition to that just looking at the description won't give enough useful information.

With the evolution of ecommerce, it is comparatively easy to assess the competitor's product online on their websites. In various methods used in the prior art, the product information is retrieved and then matching is performed. But the existing matching methods are not able to match the product present across various sites properly and the efficiency is very less. Product matching efficiency is very low so the retailers are not able to compare their product price with their competitor's products.

### SUMMARY OF THE INVENTION

Before the present methods, systems, and hardware enablement are described, it is to be understood that this invention is not limited to the particular systems, and methodologies described, as there can be multiple possible embodiments of the present invention which are not expressly illustrated in the present disclosure. It is also to be understood that the terminology used in the description is for the purpose of describing the particular versions or embodiments only, and is not intended to limit the scope of the present invention which will be limited only by the appended claims.

The present disclosure provides a system for normalizing a unit of measures of a product. The system comprises a web scrapper, a database and a processor. The web scrapper for retrieves the product information from a plurality of websites. The plurality of websites include website of product from a plurality of retailers. The processor comprises an extraction module, an identification module, a unit conversion API module and a normalization module. The extraction module extracts a unit of measures (UOM) string from the product information. The unit of measures (UOM) string includes a unit of the product and a quantity of the product. The identification module identifies a standard unit using a UOM standard lookup dictionary. The unit conversion API module converts the extracted unit of measures in to the identified standard unit. The normalization module normalizes the converted standard unit by removing the space between the unit of the product and quantity of the product, results in generation of a normalized unit of measures. The present disclosure also provides a method for normalizing a unit of measures of a product.

According to another embodiment, the disclosure also provides a method for improving a product matching efficiency for deciding a competitive pricing of the product. Initially, the product information is retrieved from an item master. In the next step, the UOM string is extracted and converted into the standard unit. Later, the standard unit of measures string is normalized for the product. In the next step, the product description is appended with normalized unit of measures. Simultaneously, the product information is also retrieved from a plurality of retailers from their websites using the web scrapper. The plurality of retailers having the same product in their website. In the next step, the UOM string is extracted from the plurality of retailer's product information. A standard unit is identified using the UOM standard lookup dictionary. The extracted unit of measures is converted in to the identified standard unit using unit conversion API module. Then the converted standard unit of the retailer's product is normalized by removing the space between the unit of the product and quantity of the product. This results in generation of a normalized unit of measures for the plurality of retailer's product. In the next step, the normalized unit of measures of the product is indexed in the database. And finally, the product is searched on a search platform to match the product with the products of the plurality of retailers.

In another embodiment, a non-transitory computer-readable medium having embodied thereon a computer program for improving a product matching efficiency for deciding a competitive pricing of the product. Initially, the product information is retrieved from an item master. In the next step, the UOM string is extracted and converted into the standard unit. Later, the standard unit of measures string is normalized for the product. In the next step, the product description is appended with normalized unit of measures. Simultaneously, the product information is also retrieved from a plurality of retailers from their websites using the web scrapper. The plurality of retailers having the same product in their website. In the next step, the UOM string is extracted from the plurality of retailer's product information. A standard unit is identified using the UOM standard lookup dictionary. The extracted unit of measures is converted in to the identified standard unit using unit conversion API module. Then the converted standard unit of the retailer's product is normalized by removing the space between the unit of the product and quantity of the product. This results in generation of a normalized unit of measures for the plurality of retailer's product. In the next step, the normalized unit of measures of the product is indexed in the database. And finally, the product is searched on a search platform to match the product with the products of the plurality of retailers.

### BRIEF DESCRIPTION OF ACCOMPANYING DRA WINGS

The foregoing summary, as well as the following detailed description of preferred embodiments, are better understood when read in conjunction with the appended drawings. For the purpose of illustrating the invention, there is shown in the drawings exemplary constructions of the invention; however, the invention is not limited to the specific methods and system disclosed. In the drawings:
Fig. 1 shows a network implementation of a system for normalizing a unit of measures of a product in accordance with an embodiment of the disclosure;
Fig. 2 shows a block diagram of the system for normalizing unit of measures of the product in accordance with an embodiment of the disclosure;
Fig. 3 shows a flowchart illustrating a method for normalizing unit of measures of the product in accordance with an embodiment of the disclosure; and

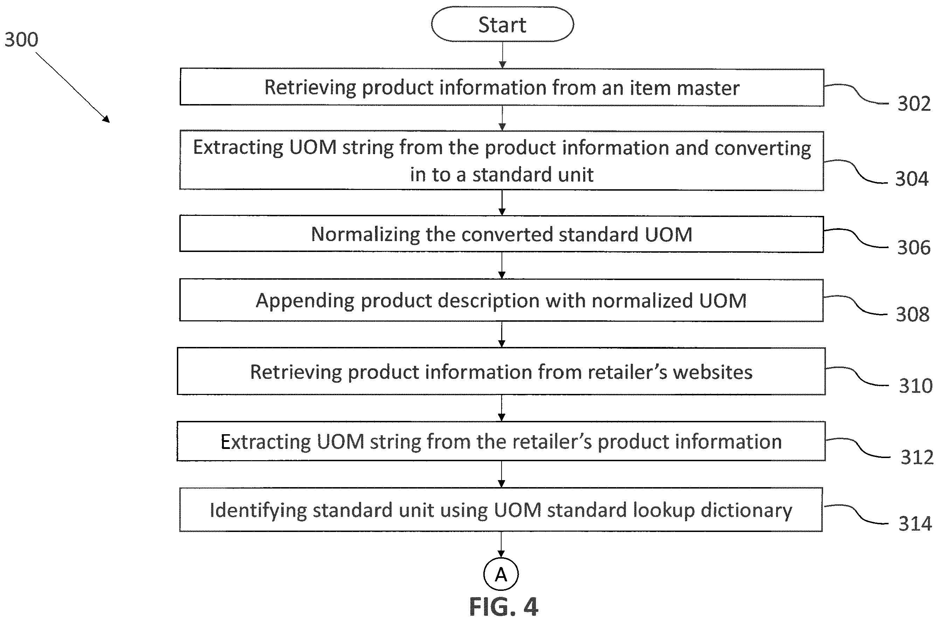

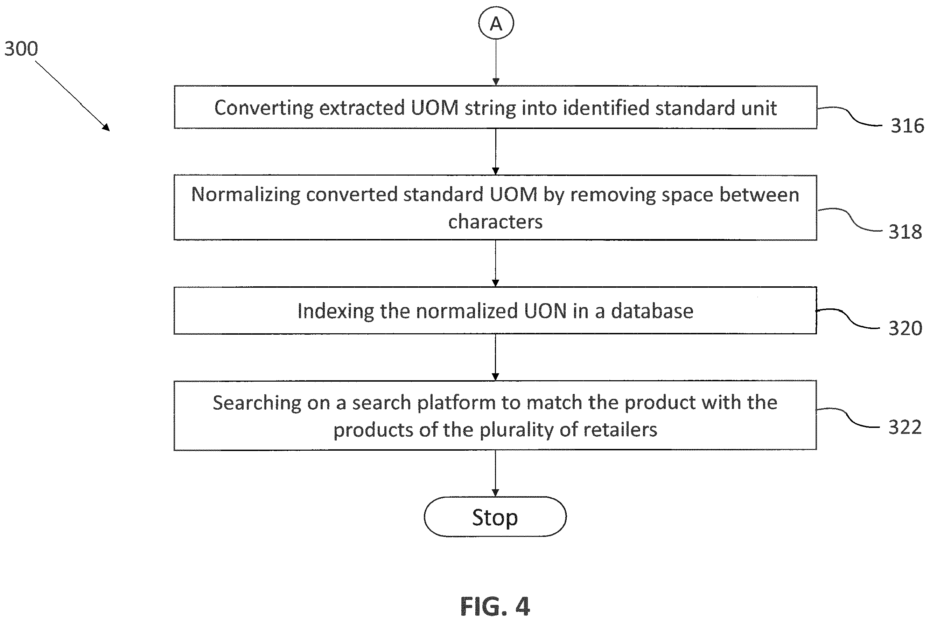

Fig. 4 shows a flowchart illustrating a method for improving a product matching efficiency for deciding a competitive pricing of the product in accordance with an embodiment of the disclosure.

The Figures depict various embodiments of the present invention for purposes of illustration only. One skilled in the art will readily recognize from the following discussion that alternative embodiments of the structures and methods illustrated herein may be employed without departing from the principles of the invention described herein.

### DETAILED DESCRIPTION

Some embodiments of this invention, illustrating all its features, will now be discussed in detail.

The words "comprising," "having," "containing," and "including," and other forms thereof, are intended to be equivalent in meaning and be open ended in that an item or items following any one of these words is not meant to be an exhaustive listing of such item or items, or meant to be limited to only the listed item or items.

It must also be noted that as used herein and in the appended claims, the singular forms "a," "an," and "the" include plural references unless the context clearly dictates otherwise. Although any systems and methods similar or equivalent to those described herein can be used in the practice or testing of embodiments of the present invention, the preferred, systems and methods are now described.

The disclosed embodiments are merely exemplary of the invention, which may be embodied in various forms.

The elements illustrated in the Figures inter-operate as explained in more detail below. Before setting forth the detailed explanation, however, it is noted that all of the discussion below, regardless of the particular implementation being described, is exemplary in nature, rather than limiting. For example, although selected aspects, features, or components of the implementations are depicted as being stored in memories, all or part of the systems and methods consistent with the attrition warning system and method may be stored on, distributed across, or read from other machine-readable media.

The techniques described above may be implemented in one or more computer programs executing on (or executable by) a programmable computer including any combination of any number of the following: a processor, a storage medium readable and/or writable by the processor (including, for example, volatile and non-volatile memory and/or storage elements), plurality of input units, and plurality of output devices. Program code may be applied to input entered using any of the plurality of input units to perform the functions described and to generate an output displayed upon any of the plurality of output devices.

Each computer program within the scope of the claims below may be implemented in any programming language, such as assembly language, machine language, a high-level procedural programming language, or an object-oriented programming language. The programming language may, for example, be a compiled or interpreted programming language. Each such computer program may be implemented in a computer program product tangibly embodied in a machine-readable storage device for execution by a computer processor.

Method steps of the invention may be performed by one or more computer processors executing a program tangibly embodied on a computer-readable medium to perform functions of the invention by operating on input and generating output. Suitable processors include, by way of example, both general and special purpose microprocessors. Generally, the processor receives (reads) instructions and data from a memory (such as a read-only memory and/or a random access memory) and writes (stores) instructions and data to the memory. Storage devices suitable for tangibly embodying computer program instructions and data include, for example, all forms of non-volatile memory, such as semiconductor memory devices, including EPROM, EEPROM, and flash memory devices; magnetic disks such as internal hard disks and removable disks; magneto-optical disks; and CD-ROMs. Any of the foregoing may be supplemented by, or incorporated in, specially-designed ASICs (application-specific integrated circuits) or FPGAs (Field-Programmable Gate Arrays). A computer can generally also receive (read) programs and data from, and write (store) programs and data to, a non-transitory computer-readable storage medium such as an internal disk (not shown) or a removable disk.

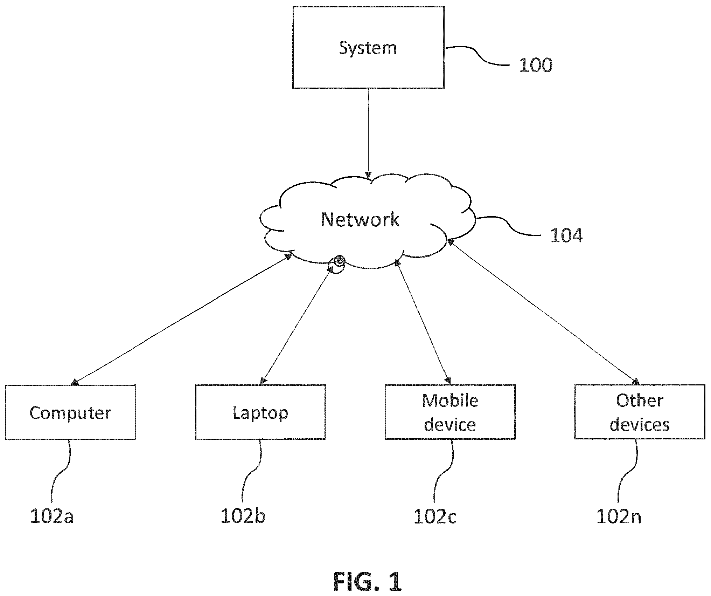

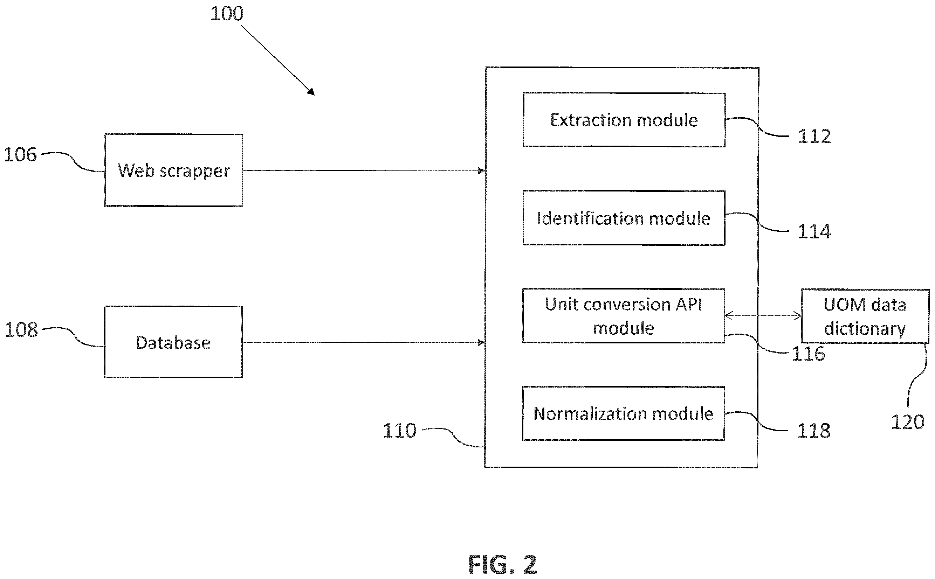

A network implementation of a system 100 for normalizing unit of measures of a product is shown in Fig. 1 and Fig. 2 according to an embodiment of the disclosure. The system 100 is also configured to improve a product matching efficiency for deciding a competitive pricing of the product in the market. The product information of the user is compared with the information of the same product but from different retailers.

Although the present disclosure is explained considering that the system 100 is implemented on a server, it may be understood that the system 100 may also be implemented in a variety of computing systems, such as a laptop computer, a desktop computer, a notebook, a workstation, a mainframe computer, a server, a network server, a cloud-based computing environment as shown in Fig. 1. It will be understood that the system 100 may be accessed by multiple users through one or more user devices 102-1, 102-2...102-N, collectively referred to as user 102 hereinafter, or applications residing on the user devices 102. In one implementation, the system 100 may comprise the cloud-based computing environment in which a user may operate individual computing systems configured to execute remotely located applications. Examples of the user devices 102 may include, but are not limited to, a portable computer, a personal digital assistant, a handheld device, and a workstation. The user devices 102 are communicatively coupled to the system 100 through a network 104.

According to an embodiment of the disclosure, the system 100 comprises a web scrapper 106, a database 108 and a processor 110. The processor 110 is configured to execute a plurality of instructions stored in a memory to perform a function. The database 108 and the web scrapper 106 are in communication with the processor 110. The processor 110 further comprises a plurality of modules such as an extraction module 112, an identification module 114, a unit conversion API module 116 and a normalization module 118.

A particular product is manufactured by multiple retailers. The information about the product is normally present on their respective websites. According to an embodiment of the disclosure, the web scrapper 106 is configured to scan a plurality of websites to retrieve the information about the product. It should be appreciated that the product information can retrieved using either a real time or a batch mode retrieving operation. The information retrieved is stored in the database 108. It should be appreciated that the product information is stored on a big data analytics framework. In an example, the big data framework used is HADOOP database. The use of any other framework such as Pentaho, GoodData, Cloudera, Apache pig etc. is well within the scope of this disclosure. The use of any type of existing web scrapper 106 is well within the scope of this disclosure. Generally, the product information includes a brand name of the product, a number of units of the product, quantity of the product, a unit of measures (UOM) of the product, a product name or type of the product. The product information varies from one retailer to another retailers.

According to an embodiment of the disclosure, the extraction module 112 is configured to extract the unit of measures string from the product information. The UOM string includes a unit of the product and a quantity/size of the product. The unit of product can be different for different retailers. The extracted UOM string is then given to the identification module 114.

According to an embodiment of the disclosure, the identification module 114 is configured to identify a standard unit using a UOM standard lookup dictionary 120. The standard unit a predefined unit which is used as a standard for a particular product. The same has been explained with the help of an example below. The UOM standard lookup dictionary 120 is a kind of database which includes all type of standard units used in the art. Based on the identification of the standard unit, the unit API conversion module 116 is configured to convert the extracted UOM in to the identified standard unit. It should be appreciated that the unit API conversion module uses a predefined algorithm for the conversion.

According to an embodiment of the disclosure, the system 100 further includes the normalization module 118. The normalization module 118 is configured to normalize the converted standard unit by removing the space between the unit of the product and the quantity of the product. It should be appreciated that in another example, the normalization can be done by some other method. The normalized UOM can be used for any other application in more effective way.

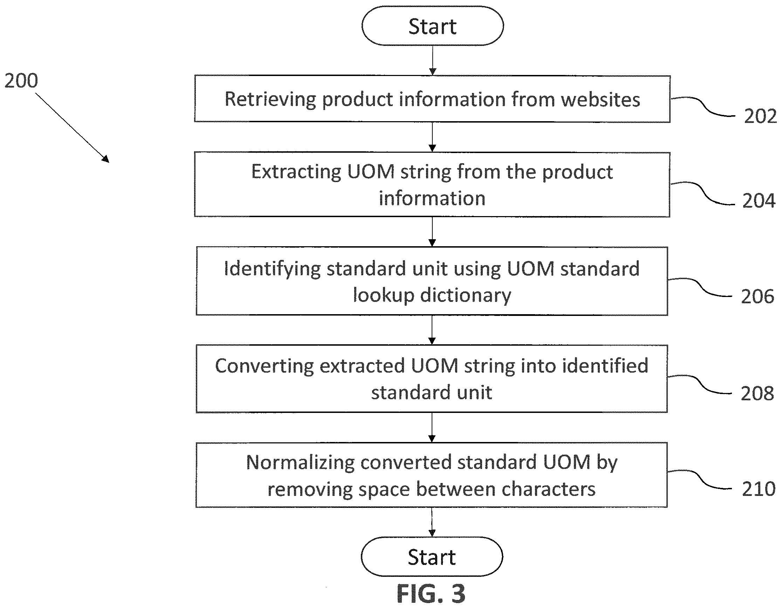

In operation, a flowchart 200 illustrating the steps involved in normalizing unit of measures of the product is shown in Fig. 3 according to an embodiment of the disclosure. Initially at step 202, the product information from a plurality of websites is retrieved using the web scrapper 106. The plurality of websites include the website which contains the listing of the similar product form the competitor retailers. In the next step 204, the UOM string is extracted from the product information. The unit of information string includes the unit of the product and quantity of the product. In the next step 206, the standard unit is identified using the UOM standard lookup dictionary 120. Later at step 208, the extracted UOM string is then converted in to the identified standard unit using the unit conversion API module 116. And finally the converted standard UOM is normalized by removing the space between the unit of the product and the quantity of the product. This step results in the generation of the normalized UOM.

According to another embodiment of the disclosure, the system 100 is also configured to improve the matching efficiency of the product description provided by two different retailers using the process of normalization. This further helps in deciding the competitive pricing of the product. A flowchart 300 illustrates the steps involved in improving the matching efficiency of the product. Initially at step 302, the product information is retrieved from an item master. The item master is type database carrying information of the products of the user using the system 100. Once the product information is retrieved then at step 304, UOM string is extracted from the product information and the UOM is converted in to the standard unit. At step 306, the converted standard unit is the normalized for the product, resulting in the generation of the normalized UOM string. The normalized UOM string includes a unit of the product and a quantity of the product. At step 308 the product information is appended with the normalized UOM.

At the same time at step 310, the product information for the same product is retrieved from a retailer's website. In the next step 312, the UOM string is extracted from the retailer's product information. At step 314, the standard unit is identified using the UOM standard lookup dictionary 120. At step 316, the extracted UOM string for the retailer's product is then converted in to the identified standard unit using the unit conversion API module 116. In the next step 318, the converted standard UOM is normalized by removing the space between the unit of the product and the quantity of the product. At next step 320, the normalized UOM from the product and retailer's product is indexed in the database 320. The indexing is performed on the Apache Solr platform. And finally at step 322, the product is searched on the search platform for further use such as for deciding competitive pricing strategy for the product.

It should be appreciated that the present disclosure can be explained with the help of following example of the product shampoo. Consider the product information retrieved using the web scrapper 106 from the website is :
"Alberto VO5 Normal Balancing Shampoo 12.5 fl oz"

The extraction module 112 will extract the UOM string i.e. "12.5 fl oz". In this string, "fl oz" is the unit of the product and "12.5" is the quantity of the product. The identification module 1114 will identify the standard unit which UOM string has to be converted. Say in this example "fl oz" needs to be converted in to "ml". The unit conversion API module 116 will now convert "12.5 fl oz" to 350 ml". Now the converted standard UOM is normalized by removing space between "350" and "ml". The normalized UOM will now look like:
"Alberto VO5 Shampoo Balancing Normal 350ml"

Similarly, the product matching efficiency also increases after normalization. It can explained with the help of following example:
Retailer A: "Alberto VO5 Shampoo Balancing Normal 12.5 oz"
Retailer B: "Alberto VO5 Normal Balancing Shampoo 12.5 fl oz"
Matching score: 1.302

After the normalization of the above mentioned two stings, they can be represented as follows:
Retailer A: "Alberto VO5 Shampoo Balancing Normal 350ml"
Retailer A: "Alberto VO5 Normal Balancing Shampoo 350ml"
Matching score: 1.833 (Improved by 40.78 %)

Thereby improving the matching efficiency by 40.78% after the normalization of UOM string.

In view of the foregoing, it will be appreciated that the present disclosure provides a method and system for normalizing the unit of measure of the product, which further can used for other applications. The preceding description has been presented with reference to various embodiments. Still, it should be understood that the foregoing relates only to the exemplary embodiments of the present invention, and that numerous changes may be made thereto without departing from the spirit and scope of the invention as defined by the following claims.

## Claims

1. A method for normalizing unit of measures of a product, the method comprising:
retrieving, the product information from a plurality of websites using a web scrapper, wherein the plurality of websites include website of product from a plurality of retailers;
extracting, by a processor, the unit of measures (UOM) string from the product information, wherein the unit of measures (UOM) string includes a unit of the product and a quantity of the product;
identifying, by the processor, a standard unit using a UOM standard lookup dictionary;
converting, by the processor, the extracted unit of measures string in to the identified standard unit using a unit conversion API module; and
normalizing, by the processor, the converted standard unit of measures by removing the space between the unit of the product and the quantity of the product, results in generation of a normalized unit of measures.

2. The method according to claim 1 further comprising the step of comparing the normalized unit of measures with a retailer's normalized unit of measures.

3. The method according to claim 1, wherein the product information is retrieved using a real time or a batch mode retrieving operation.

4. The method according to claim 1, wherein the product information includes at least one of a brand name of the product, number of units of the product, quantity of the product, unit of measures of the product, product name or type of the product.

5. A method for improving a product matching efficiency for deciding a competitive pricing of the product, the method comprising:
retrieving the product information from an item master;
normalizing a unit of measures string for the product, wherein the unit of measures (UOM) string includes a unit of the product and a quantity of the product;
appending the product description with normalized unit of measures;
retrieving the product information from a plurality of retailers from their websites using a web scrapper, wherein the plurality of retailers having the same product in their website;
extracting unit of measures (UOM) string from the plurality of retailer's product information;
identifying a standard unit using the UOM standard lookup dictionary;
converting the extracted unit of measures in to the identified standard unit using unit conversion API;
normalizing the converted standard unit by removing the space between the unit of the product and quantity of the product, results in generation of a normalized unit of measures;
indexing the normalized unit of measures of the product and retailer's product in a database; and
searching on a search platform to match the product with the products of the plurality of retailers.

6. The method according to claim 5, wherein the indexing is performed using Apache Solr.

7. A system for normalizing a unit of measures of a product, the system comprising:
a web scrapper for retrieving the product information from a plurality of websites, wherein the plurality of websites include website of product from a plurality of retailers;
a database; and
a processor, the processor comprising,
an extraction module for extracting a unit of measures (UOM) string from the product information, wherein the unit of measures (UOM) string includes a unit of the product and a quantity of the product,
an identification module for identifying a standard unit using a UOM standard lookup dictionary,
a unit conversion API module for converting the extracted unit of measures in to the identified standard unit, and
a normalization module for normalizing the converted standard unit by removing the space between the unit of the product and quantity of the product, results in generation of a normalized unit of measures.

8. The system according to claim 7, wherein the product information is stored on a big data analytics framework.

9. A non-transitory computer-readable medium having embodied thereon a computer program for deciding a competitive pricing of the product, the method comprising:
retrieving the product information from an item master;
normalizing a unit of measures string for the product, wherein the unit of measures (UOM) string includes a unit of the product and a quantity of the product;
appending the product description with normalized unit of measures;
retrieving the product information from a plurality of retailers from their websites using a web scrapper, wherein the plurality of retailers having the same product in their website;
extracting unit of measures (UOM) string from the plurality of retailer's product information;
identifying a standard unit using the UOM standard lookup dictionary;
converting the extracted unit of measures in to the identified standard unit using unit conversion API;
normalizing the converted standard unit by removing the space between the unit of the product and quantity of the product, results in generation of a normalized unit of measures;
indexing the normalized unit of measures of the product and retailer's product in a database; and
searching on a search platform to match the product with the products of the plurality of retailers.
